(19) Europäisches Patentamt
European Patent Office
Office européen des brevets

(11) Veröffentlichungsnummer: **0 340 415**
**A2**

(12) **EUROPÄISCHE PATENTANMELDUNG**

(21) Anmeldenummer: **89104050.3**

(51) Int. Cl.4: **C08L 53/00 , C08L 71/04**

(22) Anmeldetag: **08.03.89**

(30) Priorität: **05.05.88 DE 3815254**

(43) Veröffentlichungstag der Anmeldung:
**08.11.89 Patentblatt 89/45**

(84) Benannte Vertragsstaaten:
**AT BE CH DE FR GB IT LI NL**

(71) Anmelder: **HÜLS AKTIENGESELLSCHAFT**
**Patentabteilung / PB 15 - Postfach 13 20**
**D-4370 Marl 1(DE)**

(72) Erfinder: **Cantow, Hans-Joachim, Prof. Dr.**
**Schlehenrain 14**
**D-7800 Freiburg(DE)**
Erfinder: **Stadler, Reimund, Dr.**
**Bühlacherstrasse 20**
**D-7801 Vörstetten(DE)**
Erfinder: **Schmidt, Friedrich Georg, Dr.**
**Kriegerweg 32**
**D-4400 Münster(DE)**

(54) **Hochtemperaturbeständige Mischungen aus einem thermoplastischen Elastomeren und einem Thermoplasten.**

(57) Aufgabe der Erfindung war es, Kautschuke durch den Zusatz von niedrigmolekularen Polyphenylenethern wärmeformbeständiger zu machen und gleichzeitig die mechanischen Eigenschaften zu verbessern.

Es wurden jetzt Mischungen gefunden, die neben einem elastomeren Blockcopolymer vom Typ $A(BA^1)_n$ einen Polyphenylenether mit einem Zahlenmittel des Molekulargewichts zwischen 450 und 5 000 enthalten.

Die Mischungen werden zur Herstellung wärmeformbeständiger Artikel in der kunststoffverarbeitenden Industrie benötigt.

EP 0 340 415 A2

# Hochtemperaturbeständige Mischungen aus einem thermoplastischen Elastomeren und einem Thermoplasten

Gegenstand der Erfindung sind hochtemperaturbeständige Mischungen aus einem thermoplastischen Elastomeren auf Basis von Blockcopolymeren eines konjugierten Diens und einer vinylaromatischen Verbindung sowie von Polyphenylenethern (PPE). Derartige Polymere werden in jüngster Zeit vor allem zur Herstellung von Artikeln in der kunststoffverarbeitenden Industrie benötigt.

Es gibt grundsätzlich mehrere Möglichkeiten, um Elastomere wärmeformbeständiger zu machen. So kann man z. B. in Blockcopolymeren aus Dienen und alkenylaromatischen Verbindungen die "physikalische Vernetzungsdichte" erhöhen, indem man die thermoplastischen Einheiten verkleinert und deren Anteil erhöht. Dies hat aber schlechtere Verarbeitungseigenschaften zur Folge. Durch Einbau von Füllstoffen läßt sich zwar die Wärmeformbeständigkeit von Kautschuken erhöhen, gleichzeitig werden aber in der Regel die mechanischen Werte beeinträchtigt. Man kann auch Monomere, deren Homopolymer eine höhere Glastemperatur als Polystyrol aufweist, in das Elastomer mit einbauen. Ein solches Verfahren ist vielfach aufwendig, da die Monomeren in der Regel sehr unterschiedliche Polymerisationsneigungen aufweisen. Schließlich kann man das Elastomer auch mit einem weiteren Polymeren, das eine höhere Wärmeformbeständigkeit besitzt, vermischen. Dieser Weg ist in der Vergangenheit häufig beschritten worden, zumal mit den hochtemperaturbeständigen hochmolekularen Polyphenylenethern ein Material zur Verfügung steht, das mit den Styrolblöcken eines elastomeren Kautschukes gut verträglich ist.

Aus dem Stand der Technik sind auch Zusammensetzungen bekannt, die elastomere Blockcopolymere und niedrigmolekulare Polyphenylenether enthalten.

So wird z. B. in der DE-OS 27 51 329 eine thermoplastische Zusammensetzung beansprucht, die ein Polyphenylenetherharz mit einer grundmolaren Viskositätszahl von weniger als 0,4 dl/g, ein Styrolharz und ein elastomeres Blockcopolymer vom A-B-$A^1$-Typ enthält, wobei A und $A^1$ gleiche oder unterschiedliche, polymerisierte vinylaromatische Kohlenwasserstoffe sind und der Mittelblock aus einem polymerisierten Dien gebildet wird, dessen Molekulargewicht höher ist als das der vinylaromatischen Kohlenwasserstoffe in den Blöcken A und $A^1$. Gemäß Anspruch 2 weist das Polyphenylenätherharz eine grundmolare Viskositätszahl von 0,1 bis 0,33 dl/g auf; dies entspricht einem Molekulargewicht von etwa 4 200 bis 26 900 g/Mol. Das Styrolharz kann ein Homopolystyrol, ein hochschlagfestes Polystyrol oder ein styrolhaltiges Copolymer wie z. B. ein Styrol-Acrylnitril-, Styrol-Butadien- oder Styrol-Maleinsäureanhydrid-Copolymer sein. Aus diesen Zusammensetzungen lassen sich Gegenstände mit guter Schlagfestigkeit herstellen. Durch den Zusatz des Styrolharzes wird die Wärmeformbeständigkeit der Produkte allerdings beeinträchtigt. Diese Schrift vermittelt dem Fachmann keine Anregungen, Kautschuke wärmeformbeständiger zu machen.

Aus der DE-OS 28 16 615 sind hochschmelzende Klebstoffgemische aus einem thermoplastischen, elastomeren Copolymeren aus mindestens 2 endständigen monoalkenyl- oder monoalkyliden-substituierten aromatischen Kohlenwasserstoffblöcken A und mindestens einem elastomeren Zwischenblock B, zwei klebrigmachenden Harzen, die mit A bzw. B verträglich sein müssen, und einem niedrigmolekularen Polyphenylenetherharz bekannt.

In der US-PS 4 141 876 wird eine Schmelzkleberzusammensetzung beschrieben, die neben 100 Teilen eines Blockcopolymeren mit monoalkekenylaromatischen Endblöcken A eines Molekulargewichts von 2 000 bis 50 000 und einem elastomeren hydrierten Dien-Mittelblock B eines Molekulargewichts von 20 000 bis 300 000 ein mit Block B verträgliches, klebrigmachendes Harz, ein Polyphenylenetherharz mit einem Molekulargewicht von etwa 6 000 bis 25 000 und gegebenenfalls ein Strecköl enthält.

Aus den thermoplastischen Zusammensetzungen, die in der US-PS 4 154 712 beschrieben werden und ein niedrigmolekulares Polyphenylenetherharz mit einer Grundviskosität von weniger als 0,4 dl/g, ein elastomeres Blockcopolymer vom Typ A-B-$A^1$ und einen Weichmacher enthalten, lassen sich nach Formgebung Gegenstände hoher Schlagzähigkeit herstellen.

Dem Stand der Technik sind also keine Anregungen zu entnehmen, Kautschuke durch alleinigen Zusatz von niedrigmolekularen Polyphenylenethern wärmeformbeständiger zu machen und gleichzeitig die mechanischen Eigenschaften zu verbessern.

Es wurden jetzt überraschend Mischungen aus thermoplastischen Elastomeren auf Basis von Polyphenylenethern und styrolhaltigen Blockcopolymeren der Formel $A(BA)_n$ mit $n \geq 1$ gefunden, die den obengenannten Anforderungen gerecht werden. Diese sind dadurch gekennzeichnet, daß man als Polyphenylenether ein Polymeres oder Copolymeres auf Basis von

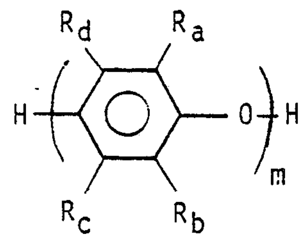

einsetzt, wobei $R_a$ und $R_b$ jeweils für einen n-Alkylrest mit 1 bis 6 C-Atomen stehen oder $R_a$ Wasserstoff und $R_b$ ein tert. $C_4$- bis $C_6$-Alkylrest ist, $R_c$ und $R_d$ jeweils für Wasserstoff oder einen $C_1$- bis $C_6$-Alkylrest stehen und m so groß ist, daß das Zahlenmittel des Molekulargewichts zwischen 450 und 5 000, vorzugsweise zwischen 1 000 und 4 000, liegt.

Das Blockcopolymer wird durch Polymerisation von vinylaromatischen Verbindungen der Formel

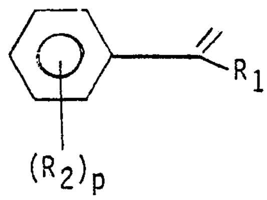

mit $R_1$ = H, $CH_3$,
$R_2$ = H, $CH_3$, Cl und
p = 1, 2
und konjugierten Dienen der Formel

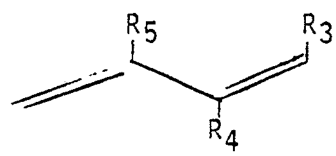

mit $R_3$, $R_4$, $R_5$ = H, $CH_3$ erhalten. 100 Teile der Mischungen enthalten 5 - 70 Teile Polyphenylenether und 95 - 30 Teile des Blockcopolymeren.

Die Mischungen gemäß der Erfindung zeichnen sich dadurch aus, daß bei aus diesen Mischungen hergestellten Formteilen die Reißdehnung und Wärmeformbeständigkeit verbessert ist.

Als Polyphenylenether werden Polymere bzw. Copolymere eingesetzt, die auf bekannte Weise durch oxidative Kupplungsreaktion von einem bzw. mehreren Phenolen der Formel

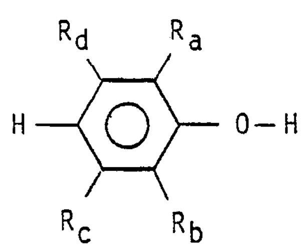

erhalten werden. Hierbei stehen $R_a$ und $R_b$ jeweils für einen n-Alkylrest mit 1 bis 6 C-Atomen oder $R_a$ ist Wasserstoff und $R_b$ ist ein tertiärer Alkylrest mit 4 bis 6 C-Atomen, insbesondere ein tertiär-Butylrest. $R_a$ und $R_b$ stehen vorzugsweise für Methyl. $R_c$ und $R_d$ haben die Bedeutung eines Alkylrestes mit 1 bis 6 C-Atomen oder vorzugsweise von Wasserstoff. Die Zahl der im Polymer vorhandenen Monomereinheiten m hängt von den jeweiligen Bedeutungen der Reste $R_a$, $R_b$, $R_c$ und $R_d$ ab und ist so groß, daß das Zahlenmittel des Molekulargewichtes $M_n$ zwischen 450 und 5 000, vorzugsweise 1 000 und 4 000, liegt.

Die Herstellung von Polyphenylenethern ist bekannt. Es sei verwiesen auf die DE-OSS 32 24 691, 32 24 692, 33 13 864, 33 32 377, 34 19 601, 34 42 141, 36 14 995 und 36 17 187 sowie auf den dort zitierten Stand der Technik. Polyphenylenether mit einem bestimmten Molekulargewicht lassen sich auf bekannte Weise herstellen, indem man entweder dem Polymerisationansatz eine eingestellte Menge eines Molekulargewichtsreglers wie z. B. 2,6- Dimethyl-4-tert. butylphenol zusetzt oder den Polymerisationsansatz rechtzeitig abstoppt.

Das elastomere Blockcopolymer weist den $A(BA^1)_n$-Typ auf. Hierbei bedeutet n eine ganze zwischen Zahl 1 und 5; vorzugsweise hat n den Wert 1. Die Endblöcke A und $A^1$ werden durch Polymerisation von gleichen oder unterschiedlichen Monomeren der Formel

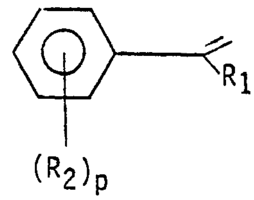

gebildet. Hierbei kann $R_1$ für Wasserstoff und Methyl und $R_2$ für Wasserstoff, Methyl und Chlor stehen. p hat die Bedeutung von 1 oder 2.

Bevorzugt sind folgende Monomere: Styrol, Alpha-Methylstyrol und Vinyltoluol.

Der Mittelblock B wird durch Polymerisation von Dienen der Formel

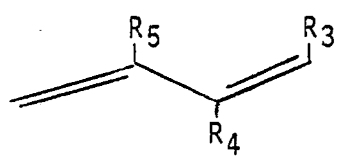

gebildet. Hierbei stehen $R_3$, $R_4$ und $R_5$ jeweils unabhängig voneinander für Wasserstoff und Methyl. Bevorzugt werden Butadien und Isopren.

Das Verhältnis der Blöcke zueinander kann in weiten Grenzen schwanken, sofern das Molekulargewicht des bzw. der Blöcke B größer ist als das der Summe der Endblöcke A und A′. Üblicherweise liegt das Molekulargewicht der Blöcke A und A′ zwischen etwa 2 000 und 100 000 und das des bzw. der Blöcke B zwischen 25 000 und 1 000 000.

Die Herstellung von derartigen Blockcopolymeren ist bekannt (vgl. z. B. US-PS 3 251 905 und US-PS 3 231 635) und wird z. B. in "Polymer Chemistry of Synthetic Elastomers", Herausgeber: Kennedy et al., Interscience Publishers, Band 23, Teil II, insbesondere Seite 553 - 559 (1969) beschrieben.

Es können auch vollständig und teilweise hydrierte Blockcopolymere sowie deren Mischungen eingesetzt werden. Im Falle der hydrierten Blockcopolymeren weisen die Endblöcke A bzw. $A^1$ ein Molekulargewicht von 4 000 bis 11 000 und der bzw. die Blöcke B ein Molekulargewicht von 20 000 bis 450 000 auf. Ein Verfahren zur Herstellung von hydrierten Blockcopolymeren wird z. B. in der US-PS 3 431 323 beschrieben.

100 Teile des Elastomeren enthalten 5 bis 70, vorzugsweise 10 bis 40 Teile Polyphenylenether und 95 bis 30, vorzugsweise 90 bis 60 Teile Blockcopolymere.

Die thermoplastischen Elastomeren können daneben weitere Zusatzstoffe wie z. B. Pigmente, Farbstoffe, Flammschutzmittel, Weichmacher, Antioxydationsmittel, Lichtschutzmittel, Verstärkungsmittel und Füllstoffe enthalten.

Die thermoplastischen Elastomeren können hergestellt werden, indem die Komponenten zunächst trocken gemischt und anschließend in einem Extruder bei einer Temperatur von 160 °C bis 320 °C im schmelzflüssigen Zustand innig vermischt werden. Anschließend wird das Extrudat abgekühlt und granuliert. Das Granulat kann z. B. durch Spritzguß in die gewünschte Form gebracht werden. Man kann auch die Bestandteile in einem organischen Lösemittel mischen und anschließend das Lösemittel entfernen.

<u>Experimenteller Teil</u>

Das oligomere PPE ($M_n$ = 3 400 g/Mol) wurde gemäß Macromolecular Synthesis Vol. 1, 75 (1963) hergestellt.

Es wurden folgende Blockcopolymeren eingesetzt:

TUFPRENE$^R$ A = Styrol-Butadien-Styrol-Blockcopolymeres der Fa. Asahi, Osaka, Japan

KRATON$^R$ D 1102 = Styrol-Butadien-Styrol-Blockcopolymeres der Shell Chemical Co., London, SE1 7PG, GB

KRATON$^R$ D 1104 = Styrol-Butadien-Styrol-Blockcopolymeres der Shell Chemical Co., London, SE1 7PG, GB

KRATON$^R$ G 1650 = Styrol-Ethylen-Butylen-Styrol-Blockcopolymeres der der Shell Chemical Co., London, SE1 7PG, GB

Die Eigenschaften der Produkte sind den einschlägigen Firmenschriften zu entnehmen.

Die Torsionsschwingungensdiagramme wurden aufgenommen, indem man die freie Torsion bei Schwingung mit dem Lonza-Pendel bestimmte (vgl. G. Wegner et al., Angew. Makromol. Chemie 74, 295 ff. (1978).

## Vergleichsbeispiele A bis G

Es wurden gemäß Tabelle 1 Lösungen von Styrol-Butadien-Styrol-Blockcopolymeren hergestellt. Anschließend wurde durch das Lösemittel bei Raumtemperatur verdampft und die erhaltenen Filme im Vakuum bei Raumtemperatur bis zur Gewichtskonstanz getrocknet.

In den Beispielen E, F und G wurde durch Schmelzepressen ein Formkörper hergestellt.

Tabelle 1

| Vergleichsbeispiel | A | B | C | |
|---|---|---|---|---|
| Blockcopolymer | TUFPRENE$^R$ A | TUFPRENE$^R$ A | KRATON$^R$ G 1650 | |
| Lösungsmittel | Toluol | THF | Toluol | |
| Elastizitätsmodul in N/mm$^2$ | 26,4 | 38,2 | 7,1 | |
| Vergleichsbeispiel | D | E | F | G |
| Blockcopolymer | KRATON$^R$ D 1102 | KRATON$^R$ D 1102 | KRATON$^R$ G 1650 | KRATON$^R$ D 1104 |
| Lösungsmittel bzw. Schmelze | THF | Schmelze | Schmelze | Schmelze |
| Elastizitätsmodul in N/mm$^2$ | 9,4 | 7,1 | 12,6 | 1,73 |

## Beispiele 1 bis 10

Es wurden gemäß Tabelle 2 Mischungen aus Blockcopolymeren und oligomerem PPE in toluolischen Lösungen hergestellt. Das Lösemittel wurde bei Raumtemperatur verdampft und die erhaltenen Filme bis zur Gewichtskonstanz getrocknet.

Tabelle 2

| Bsp. | 1 | 2 | 3 | 4 | 5 | 6 | 7 | 8 | 9 | 10 |
|---|---|---|---|---|---|---|---|---|---|---|
| Teile TUFPRENE$^R$ | 100 | 100 | 100 | - | - | - | - | - | - | - |
| Teile KRATON$^R$ D 1102 | - | - | - | 100 | 100 | 100 | 100 | - | - | |
| Teile KRATON$^R$ G 1650 | - | - | - | - | - | - | - | 100 | 100 | 100 |
| Teile PPE | 5,25 | 11,1 | 25,0 | 5,3 | 11,1 | 25,0 | 42,8 | 11,2 | 42,8 | 66,6 |

<u>Beispiele 11 bis 19</u>

Analog zu der Vorgehensweise in den Beispielen 1 bis 10 wurden Mischungen in THF hergestellt und aus ihnen Filme gewonnen.

Tabelle 3

| Bsp. | 11 | 12 | 13 | 14 | 15 | 16 | 17 | 18 | 19 |
|---|---|---|---|---|---|---|---|---|---|
| Teile TUFPRENE$^R$ | 100 | 100 | 100 | 100 | - | - | - | - | - |
| Teile KRATON$^R$ D 1102 | - | - | - | - | 100 | 100 | 100 | 100 | 100 |
| Teile PPE | 5,25 | 11,1 | 25,0 | 42,8 | 5,3 | 11,1 | 25,0 | 42,8 | 66,6 |

<u>Beispiele 20 bis 25</u>

Die Abmischungen in den Beispielen 20 bis 25 wurden durch Coextrusion der Komponenten hergestellt.

Tabelle 4

| Bsp. | 20 | 21 | 22 | 23 | 24 | 25 |
|---|---|---|---|---|---|---|
| Teile KRATON$^R$ D 1104 | 100 | 100 | - | - | 100 | 100 |
| Teile KRATON$^R$ G 1650 | - | - | 100 | 100 | - | - |
| Teile PPE | 8,4 | 14 | 8,4 | 14 | 10 | 20 |

Die Erhöhung des Elastizitätsmoduls (E-Modul) (am Zugversuch bestimmt) durch den Zusatz des niedermolekularen PPE's ist in der Tabelle 5 dargestellt.

Tabelle 5

| Bsp. Nr. | E-Modul | Bsp. Nr. | E-Modul |
|---|---|---|---|
| 1 | 29,8 | 14 | 93,4 |
| 2 | 46,5 | 15 | 16,0 |
| 3 | 70,8 | 16 | 31,9 |
| 4 | 11,7 | 17 | 43,7 |
| 5 | 41,7 | 18 | 85,3 |
| 6 | 100,8 | 19 | 122,7 |
| 7 | 118,7 | 20 | 17,3 |
| 8 | 81,7 | 21 | 21,9 |
| 9 | 124,6 | 22 | 17,7 |
| 10 | 224,4 | 23 | 44,4 |
| 11 | 44,3 | 24 | 2,2 |
| 12 | 47,4 | 25 | 10,0 |
| 13 | 82,4 | | |

Die Erhöhung der Reißspannung durch den Zusatz an niedermolekularem PPE ist in den Abbildungen 1 und 2 dargestellt. Die Erhöhung der Streckspannung durch den Zusatz an niedermolekularem PPE ist in Abbildung 3 dargestellt. Die Erhöhung der Glasübergangstemperatur der Hartphase (Polystyrol- bzw. Polystyrol-/PPE- Phasen) durch den Zusatz an niedermolekularem PPE ist in den Abbildungen 4 bis 6 dargestellt.

## Ansprüche

1. Hochtemperaturbeständige Mischungen auf Basis von Polyphenylenethern und styrolhaltigen Blockcopolymeren der Formel $A(B\ A)_n$ mit $n \geqq 1$,
dadurch gekennzeichnet,
daß man als
Polyphenylenether ein Polymeres oder Copolymeres auf Basis von

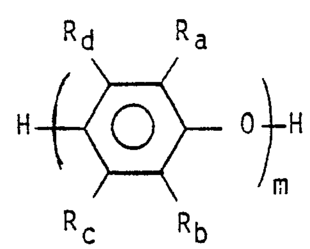

einsetzt, wobei $R_a$ und $R_b$ jeweils für einen n-Alkylrest mit 1 bis 6 C-Atomen stehen oder $R_a$ Wasserstoff und $R_b$ ein tert. $C_4$- bis $C_6$-Alkyrest ist, $R_c$ und $R_d$ jeweils für Wasserstoff oder einen $C_1$- bis $C_6$-Alkylrest stehen und m so groß ist, daß das Zahlenmittel des Molekulargewichts zwischen 450 und 5 000 liegt, und das Blockcopolymer durch Polymerisation von vinylaromatischen Verbindungen der Formel

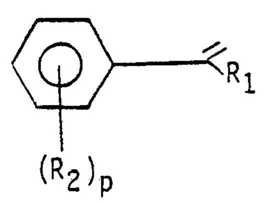

mit $R_1$ = H, $CH_3$,

$R_2$ = H, $CH_3$, Cl und
p = 1, 2
und konjugierten Dienen der Formel

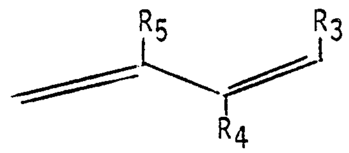

mit $R_3$, $R_4$, $R_5$ = H, $CH_3$
erhalten wird,
wobei, bezogen auf 100 Teile der Mischungen
5 - 70 Teile Polyphenylenether und
95 - 30 Teile Blockcopolymer
kommen.

2. Mischungen gemäß Anspruch 1,
dadurch gekennzeichnet,
daß als Polyphenylenether ein Polymeres des 2,6-Dimethylphenols mit einem Molekulargewicht von 3 000 bis 3 500 eingesetzt wird.

3. Mischung gemäß den Ansprüchen 1 und 2,
dadurch gekennzeichnet,
daß als Blockcopolymer ein Styrol-Butadien-Styrol-Blockcopolymer eingesetzt wird.

4. Mischung gemäß Anspruch 3,
dadurch gekennzeichnet,
daß der Anteil des Styrols im Blockcopolymer zwischen 20 und 50 % beträgt.

5. Mischungen gemäß den Ansprüchen 3 und 4,
dadurch gekennzeichnet,
daß ein hydriertes Styrol-Butadien-Styrol-Blockcopolymer eingesetzt wird.

O.Z. 4320

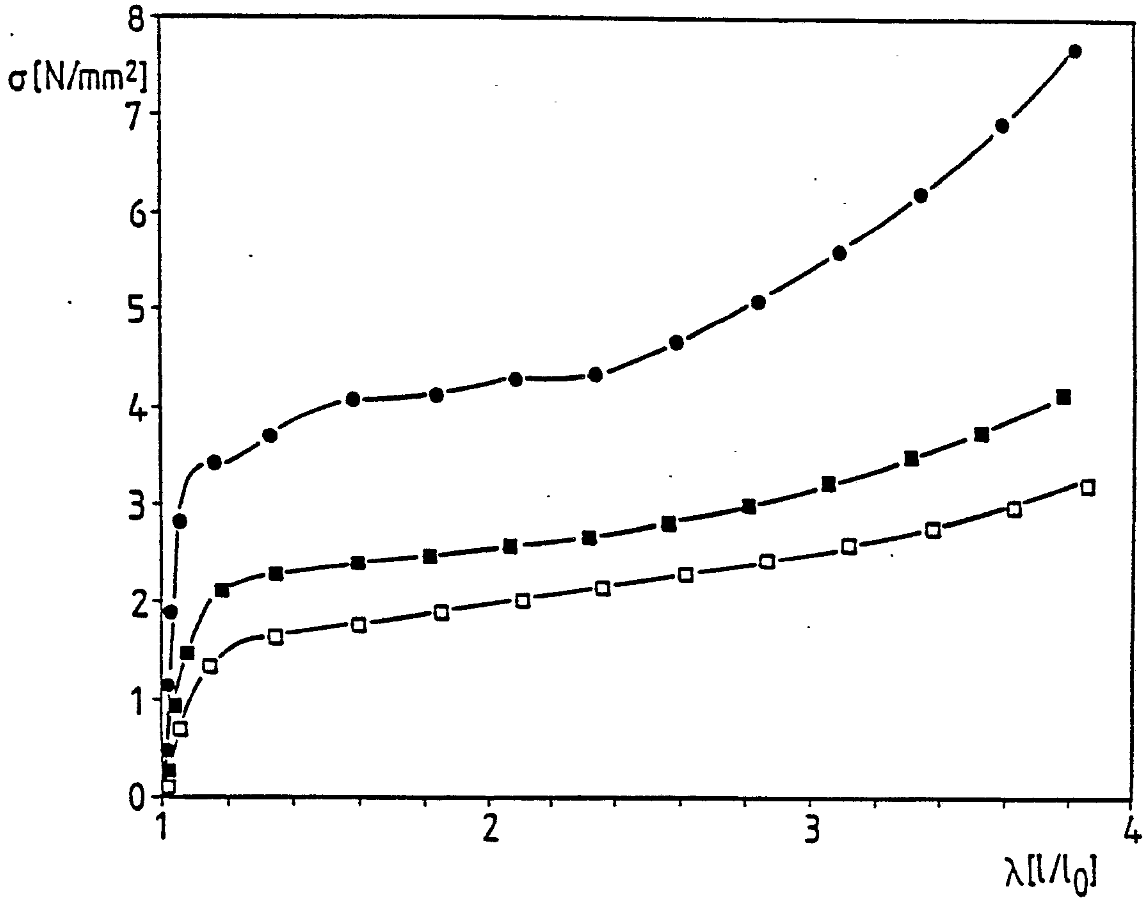


Abb. 1: Spannungs-Dehnungs-Kurven der Beispiele F (□), 22 (■) und 23 (●)

O.Z. 4320

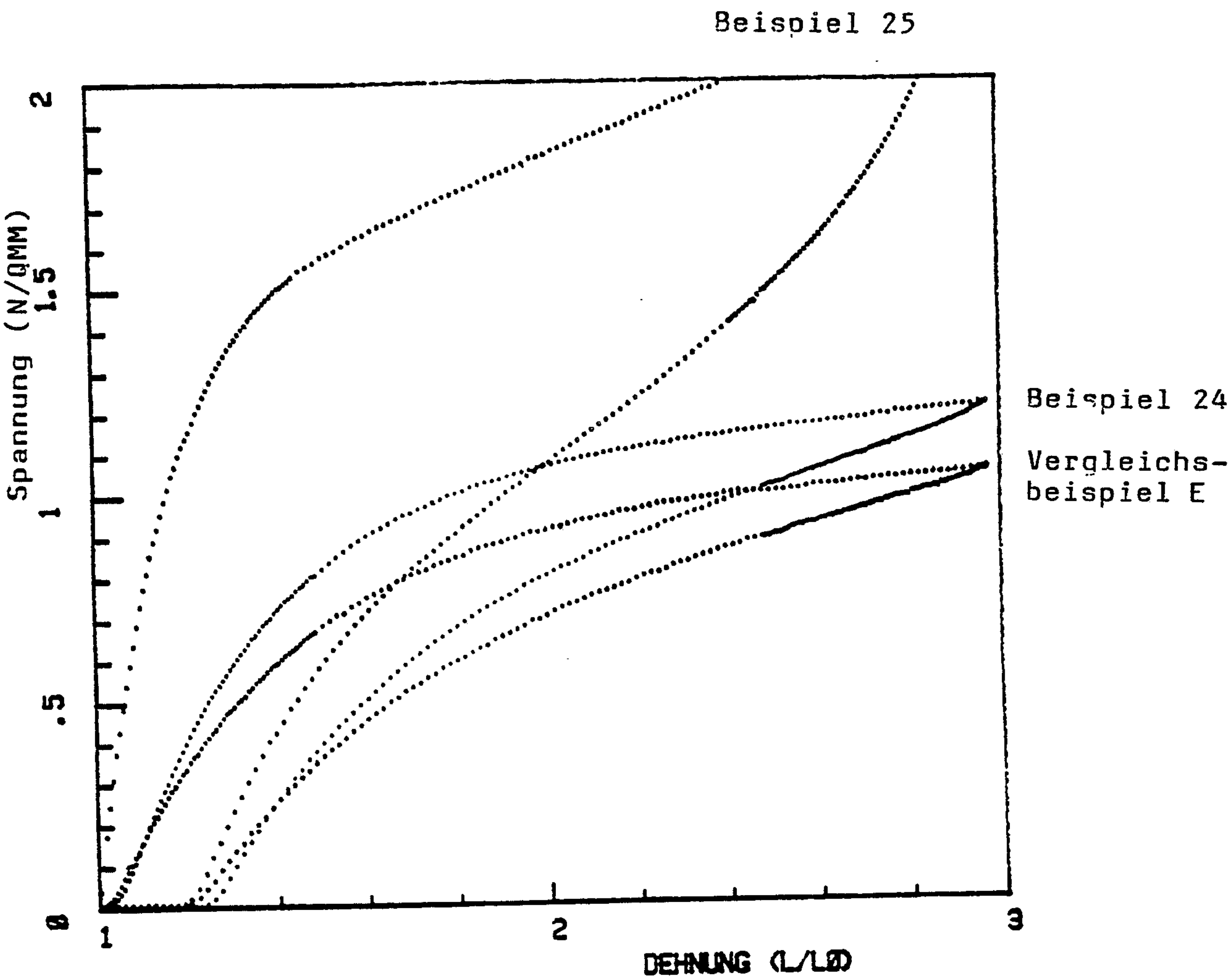
Beispiel 25
Beispiel 24
Vergleichs-
beispiel E
Spannung (N/QMM)
2
1.5
1
.5
0
1
2
3
DEHNUNG (L/LØ)

Abb. 2

O.Z. 4320

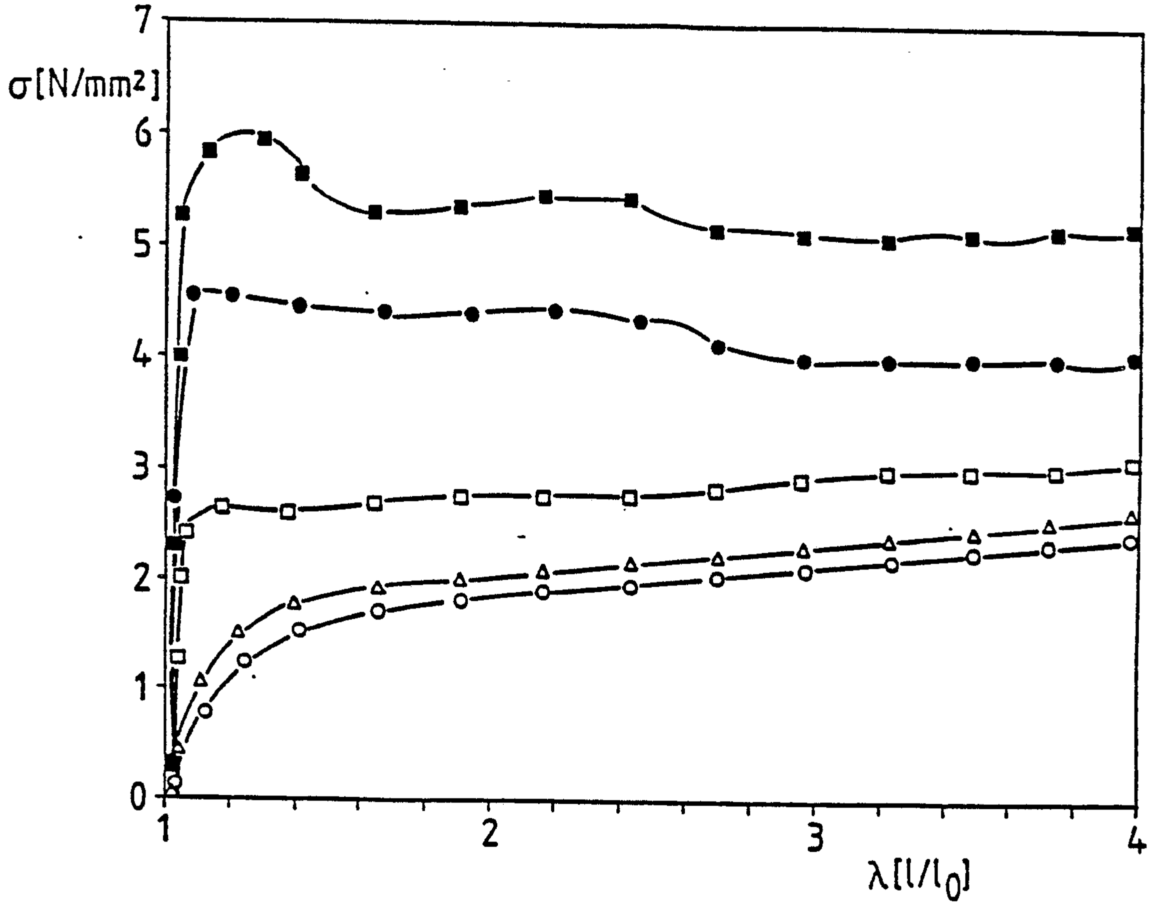


Abb. 3: Spannungs-Dehnungs-Kurven der Beispiele
C (○), 4 (△), 5 (□), 6 (●) und 7 (■)

O.Z. 4320

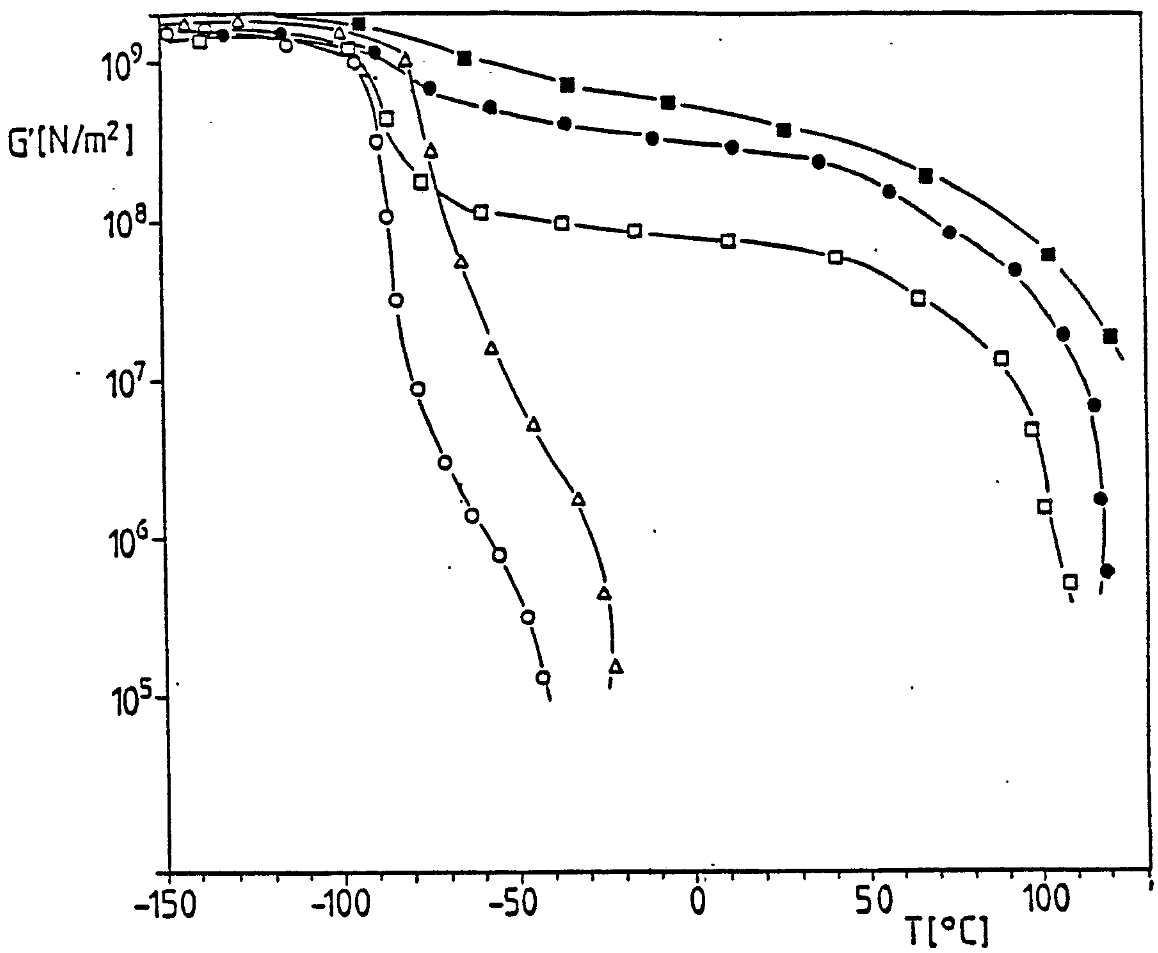


Abb. 4: Torsionsschwingungsdiagramme (G')
der Bsp. C (○), 4 (△), 5 (□), 6 (●) und 7 (■)

O.Z. 4320

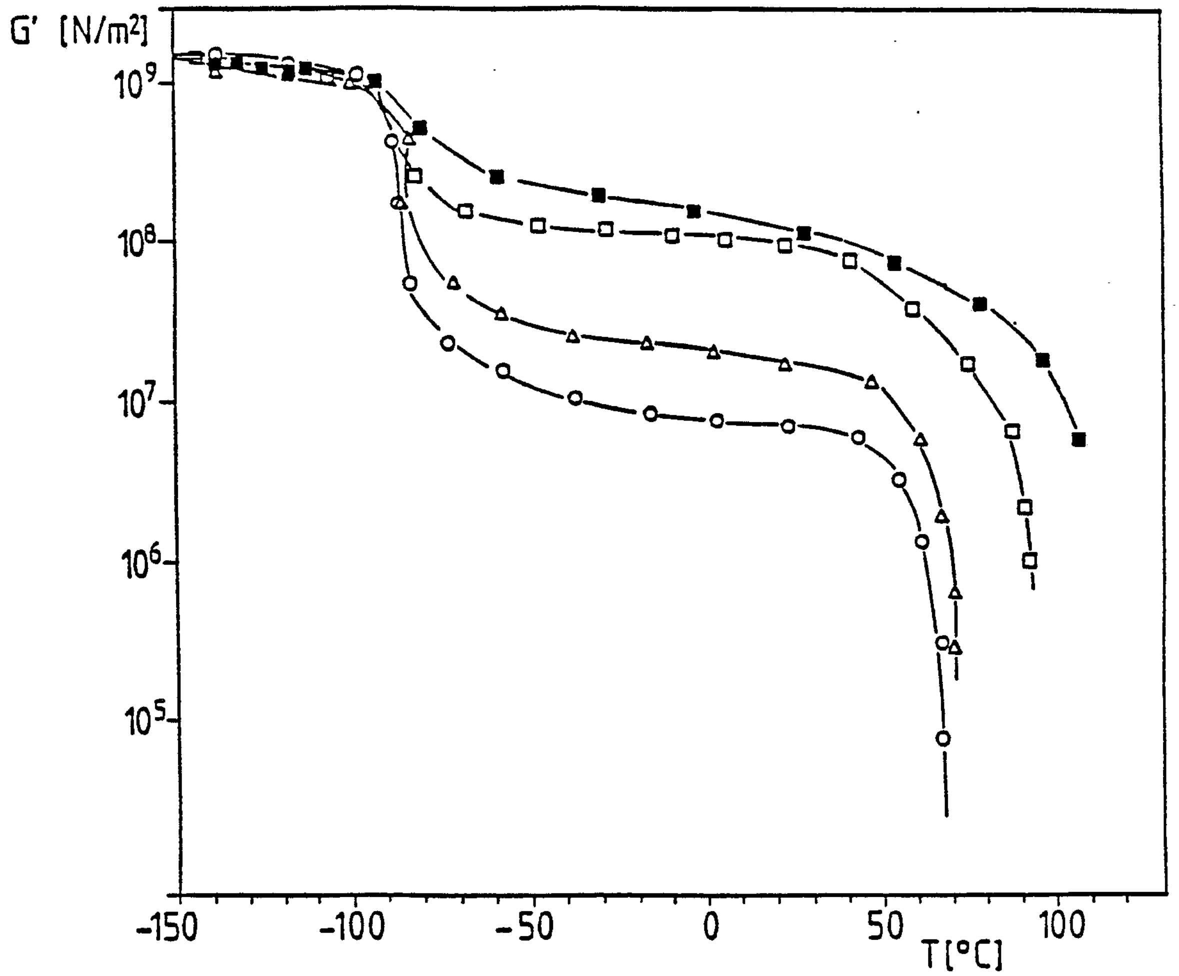


Abb. 5: Torsionsschwingungsdiagramme(G')
der Beispiele D (○), 15 (△), 16 (□) und 18 (■)

O.Z. 4320

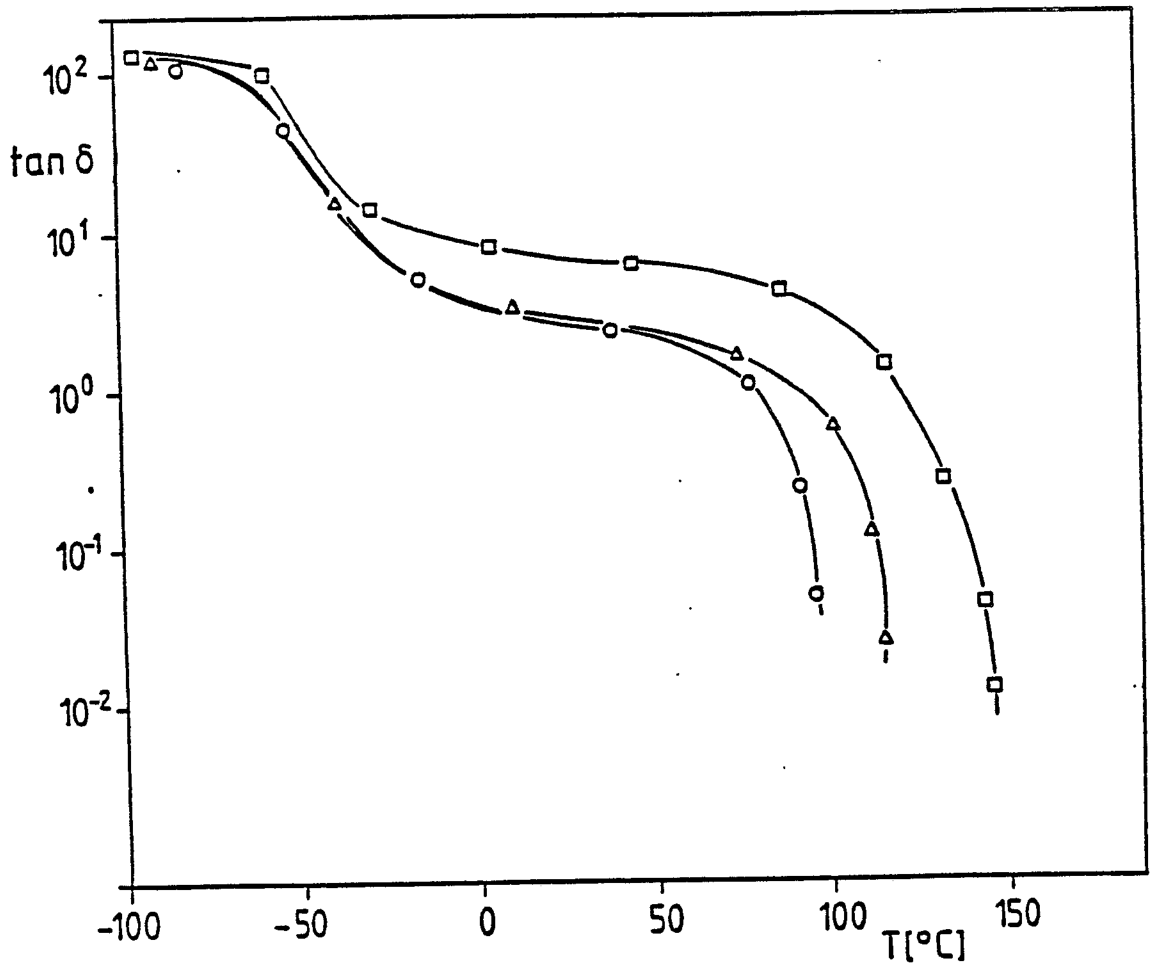


Abb. 6: Torsionsschwingungsdiagramme(G')
der Beispiele F (○), 22 (△) und 23 (□)